(19) **Europäisches Patentamt**
**European Patent Office**
**Office européen des brevets**

(11) **EP 4 523 982 A1**

(12) **EUROPEAN PATENT APPLICATION**

(43) Date of publication:
**19.03.2025 Bulletin 2025/12**

(21) Application number: **23196886.8**

(22) Date of filing: **12.09.2023**

(51) International Patent Classification (IPC):
**B60T 8/17** *(2006.01)*     **B60T 8/172** *(2006.01)*
**B60T 8/174** *(2006.01)*     **B60T 8/176** *(2006.01)*
**B60T 8/18** *(2006.01)*

(52) Cooperative Patent Classification (CPC):
**B60T 8/1705; B60T 8/172; B60T 8/176;**
**B60T 8/1893;** B60T 2240/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Dellner Bubenzer AB**
**781 70 Borlänge (SE)**

(72) Inventor: **PRIM, Viktor**
**811 61 Sandviken (SE)**

(74) Representative: **Brann AB**
**P.O. Box 3690**
**Sveavägen 63**
**103 59 Stockholm (SE)**

(54) **CONTROLLER FOR CONTROLLING RAIL VEHICLE BRAKE UNITS, COMPUTER-IMPLEMENTED METHOD THEREFOR, COMPUTER PROGRAM AND NON-VOLATILE DATA CARRIER**

(57) During propulsion of a rail vehicle (100), a respective adhesion parameter ($\mu_{m1}$, $\mu_{m2}$, $\mu_{m3}$, $\mu_{m4}$, $\mu_{mi}$, $\mu_{mn}$) is repeatedly determined, which respective adhesion parameter reflects a friction coefficient ($\mu e$) between each wheel (101, 102, 103, 104, 10i, 10n) of the rail vehicle (100) and a rail (191) upon which the wheel travels. Based on the respective adhesion parameter and an estimated load ($L_1$, $L_2$, $L_3$, $L_4$, $L_i$, $L_n$) on each of the wheels, a respective largest brake load possible to apply ($[BL_i]$) on each of the wheels without exceeding a threshold amount of sliding between the wheel and the rail (191) is determined. For each of the wheels, a latest determined largest brake load possible to apply is stored in a memory (145). In response to receiving a brake command (B), the latest determined largest brake load possible for each of the wheels is obtained from the memory (145), and via a set of electrically operated brake units, a respective brake force is caused to be applied to each of the wheels, which respective brake force is based on the received brake command (B) and the latest determined largest brake load possible to apply ($[BL_i]$) on each of the wheels (101, 102, 103, 104, 10i, 10n).

Fig. 1

EP 4 523 982 A1

**Description**

TECHNICAL FIELD

The present invention relates generally to retardation of rail vehicles. Especially, the invention relates to a controller for controlling a set of electrically operated brake units of a rail vehicle according to the preamble of claim 1. The invention also relates to a corresponding computer-implemented method, a computer program and a non-volatile data carrier storing such a computer program.

BACKGROUND

The length of rail vehicles vary substantially from single car carriages to extremely long combinations of connected carriages being several kilometers long. In the former case, it is reasonable to expect that the adhesion conditions are essentially identical for all the wheels of the rail vehicle. In the latter case, however, it is highly probable that the adhesion conditions vary, at least to some extent, along the extension of the rail vehicle.

Traditionally, if a non-uniform brake load distribution is applied, the brake load is shifted slightly towards the front brake units of the rail vehicle, so that a somewhat higher brake load is allocated in the front than in the rear of the rail vehicle. Such a brake load distribution may, however, not always be ideal. For example, if there are leaves or snow on the tracks, the front wheels will typically experience a lower friction than the rear wheels because when the rear wheels reach the problematic track section, the front wheels have already cleared the tracks more or less. Inter alia, due to factors like the above, it is far from trivial to attain an optimal brake load distribution in a rail vehicle. In general, today's approach is based on theoretical friction coefficients and relies on a restrictive brake performance, where the brake force may be rapidly reduced by a wheel slide protection (WSP) system. Additionally, the brake force is normally determined by testing on slippery tracks. Consequently, the friction coefficient is determined as a function of WSP efficacy, which, of course, may be very misleading.

SUMMARY

The object of the present invention is to mitigate the above problems and offer a solution that enables an overall more efficient braking of rail vehicles.

According to one aspect of the invention, the object is achieved by a controller for controlling a set of brake units of a rail vehicle. The controller is configured to determine, repeatedly, a respective adhesion parameter that reflects a friction coefficient between each wheel of the rail vehicle and a rail upon which the wheel travels. The controller is further configured to determine, based on the respective adhesion parameter and an estimated load on each of the wheels, a respective largest brake load possible to apply on each of the wheels without exceeding a threshold amount of sliding between the wheel and the rail. The controller is also configured to store, for each of the wheels, a latest determined largest brake load possible to apply in a memory. In response to a received brake command, the controller is further configured to: obtain the latest determined largest brake load possible for each of the wheels from the memory, and cause a respective brake force to be applied to each of the wheels. Here, the respective brake force is based on the received brake command and the latest determined largest brake load possible to apply on each of the wheels.

The above controller is advantageous because it allows using each brake unit to its full potential given the adhesion circumstances under which the brake unit currently operates. As a result, the overall brake performance of the rail vehicle is improved. In particular, this is true compared to traditional pneumatically operated brake units that cannot be controlled with such low latency, and whose brake load cannot be distributed in a manner possible for electrically operated brake units.

According to one embodiment of this aspect of the invention, the controller is configured to cause the respective brake forces to begin to be applied at different points in time via different brake units in the set of brake units. For example, starting from the rear, a growing number of brake units may be gradually activated during a brake operation, such that the rail vehicle is stretched couple by couple towards the front as braking progresses. Conversely, starting from the front, a growing number of brake units may be gradually activated, such that the rail vehicle is instead compressed during the brake operation. Alternatively, different brake units may be activated sequentially as the rail vehicle passes a track section with especially advantageous adhesion.

Preferably, the specific point in time at which a particular one of the brake units is activated depends on the latest determined largest brake load possible to apply on each of the wheels. For instance, a given brake unit may be controlled to apply a brake load when the largest brake load possible to apply exceeds a threshold level.

According to another embodiment of this aspect of the invention, the specific point in time at which a particular one of said brake units is activated depends on a position of the brake unit in the rail vehicle. For example, a brake operation may start by activating only those brake units that, due to their positions in the rail vehicle and/or on the track, fulfil at least one activation condition.

According to yet another embodiment of this aspect of the invention, the controller is configured to estimate a total weight of the rail vehicle based on a power signal indicating an amount of power produced by a set of drive units in the rail vehicle when accelerating the rail vehicle from a first speed to a second speed; and a speed signal indicating respective values of the first and second speeds. Namely, assuming that all the supplied power is converted into kinetic energy of the rail vehicle, it is straightforward to derive a measure of its overall weight.

According to still another embodiment of this aspect of the invention, the controller is configured to determine a particular adhesion parameter of the respective adhesion parameters, which particular adhesion parameter reflects the friction coefficient between a particular wheel and the rail upon which that wheel travels by: (a) obtaining wheel speed signals indicating respective rotational speeds of a set of wheel axles in a driving subset of wheel axles of the rail vehicle; (b) controlling a specific drive unit in a set of drive units to produce an acceleration control signal such that the specific drive unit applies a gradually increasing traction force to a specific wheel axle on which the wheel is mounted; (c) determine, repeatedly, during production of the acceleration control signal, an absolute difference between the rotational speed of the specific wheel axle and an average rotational speed of the wheel axles in the driving subset of the wheel axles except the specific wheel axle; and in response to the absolute difference exceeding a threshold value (d) determine the particular adhesion parameter. Such controlled stressing of the adhesion interface renders it possible to estimate the friction coefficient very accurately.

Preferably, the controller is further configured to repeat steps (a) to (c) for each of the wheel axles in the driving subset of wheel axles being defined as the specific wheel axle, based thereon estimate a respective weight fraction of the overall weight carried by each of the wheel axles in the driving subset of wheel axles, and based thereon, in turn, determine the estimated load on each of the wheels.

According to another embodiment of this aspect of the invention, the controller is configured to: produce the acceleration control signal to the specific drive unit, and produce respective acceleration control signals to each drive unit in the set of drive units arranged to cause traction forces to be applied to the wheel axles in the driving subset of the wheel axles different from the specific wheel axle, such that an average traction force applied to the wheel axles different from the specific wheel axle is gradually decreased when the traction force applied to the first wheel axle is gradually increased. Namely, this efficiently masks the controlled stressing of the adhesion interface, so that it is not noticeable to any passengers in the rail vehicle.

According to yet another embodiment of this aspect of the invention, the controller is configured to determine a particular adhesion parameter of the respective adhesion parameters, which particular adhesion parameter reflects the friction coefficient between at least one particular wheel of said wheels and the rail upon which the at least one particular wheel travels by: (a) obtaining wheel speed signals indicating respective rotational speeds of each wheel axle of the rail vehicle; (b) controlling a specific brake unit in a set of brake units to produce a brake control signal such that the specific brake unit applies a gradually increasing brake force to a specific wheel axle of said wheel axles on which specific wheel axle the at least one wheel is mounted; (c) determine, repeatedly, during production of the brake control signal, an absolute difference between the rotational speed of the specific wheel axle and an average rotational speed of the wheel axles except the specific wheel axle; and in response to the absolute difference exceeding a threshold value (d) determine the particular adhesion parameter. This alternative controlled stressing of the adhesion interface is advantageous because not only does it enable estimating the friction coefficient very accurately, it also allows determining the adhesion parameter for all wheels of the rail vehicle, since it is safe to assume that all wheels of the rail vehicle are braked.

Analogous to the traction embodiment described above, the controller is preferably further configured to repeat steps (a) to (c) for each of the wheel axles being defined as the specific wheel axle, based thereon estimate a respective weight fraction of the overall weight carried by each of the wheel axles s, and based thereon, in turn, determine the estimated load on each of the wheels.

According to still another embodiment of this aspect of the invention, the controller is configured to: produce the brake control signal to the specific brake unit and produce respective brake control signals to each brake unit in the set of brake units arranged to cause brake forces to be applied to the wheel axles different from the specific wheel axle, such that an average brake force applied to the wheel axle different from the specific wheel axle is gradually decreased when the brake force applied to the specific wheel axle is gradually increased. Namely, this efficiently masks the controlled stressing of the adhesion interface, so that it is not noticeable to any passengers in the rail vehicle.

According to a further embodiment of this aspect of the invention, the controller is configured to receive the brake command via a data bus. For example, the controller may also be configured to send respective brake control signals via the data bus, which respective brake control signals are configured to cause the respective brake forces to be applied to each of the wheels. This renders the overall brake control in the rail vehicle efficient.

According to another embodiment of this aspect of the invention, while causing the respective brake force to be applied to each of the wheels of the rail vehicle, the controller is further configured to determine, repeatedly, the respective adhesion parameter reflecting the friction coefficient between each wheel of the rail vehicle and the rail upon which the wheel travels; determine, based on the respective adhesion parameter and the estimated load on each of the wheels, the respective largest brake load possible to apply on each of the wheels without exceeding the threshold amount of sliding between the wheel and the rail, and adapt the respective brake forces being applied to each of the wheels of the rail vehicle based on the determined respective largest brake load possible to apply on each of the wheels without exceeding the threshold amount of sliding between the wheel and the rail. Consequently, the brake force may be dynamically adjusted even during braking and without engaging any WSP system that may be linked to the brake units.

According to another aspect of the invention, the object is achieved by a computer-implemented method for controlling a set of electrically operated brake units in a rail vehicle, which method is performed in processing unit of a controller of the rail vehicle. The method involves determining, repeatedly, a respective adhesion parameter reflecting a friction coefficient between each wheel of the rail vehicle and a rail upon which the wheel travels; determining, based on the respective adhesion parameter and an estimated load on each of the wheels, a respective largest brake load possible to apply on each of the wheels without exceeding a threshold amount of sliding between the wheel and the rail; storing, for each of the wheels, a latest determined largest brake load possible to apply in a memory. In response a received brake command, the method further involves: obtaining the latest determined largest brake load possible to apply for each of the wheels from the memory, and causing a respective brake force to be applied to each of the wheels, which respective brake force is based on the received brake command and the latest determined largest brake load possible to apply on each of the wheels. The advantages of this method, as well as the preferred embodiments thereof are apparent from the discussion above with reference to the proposed controller.

According to a further aspect of the invention, the object is achieved by a computer program loadable into a non-volatile data carrier communicatively connected to a processing unit. The computer program includes software for executing the above method when the program is run on the processing unit.

According to another aspect of the invention, the object is achieved by a non-volatile data carrier containing the above computer program.

Further advantages, beneficial features and applications of the present invention will be apparent from the following description and the dependent claims.

BRIEF DESCRIPTION OF THE DRAWINGS

The invention is now to be explained more closely by means of preferred embodiments, which are disclosed as examples, and with reference to the attached drawings.

Figure 1   schematically illustrates a rail vehicle equipped with a controller according to one embodiment of the invention;

Figure 2   shows a motorized railroad car included in the rail vehicle according to one embodiment of the invention;

Figure 3   shows a block diagram of a controller according to one embodiment of the invention;

Figure 4   illustrates the communication between the controller and a drive unit according to one embodiment of the invention;

Figure 5   shows a graph illustrating an example of the friction coefficient as a function of wheel slippage; and

Figure 6   illustrates, by means of a flow diagram, the method according to the invention and preferred embodiments thereof.

DETAILED DESCRIPTION

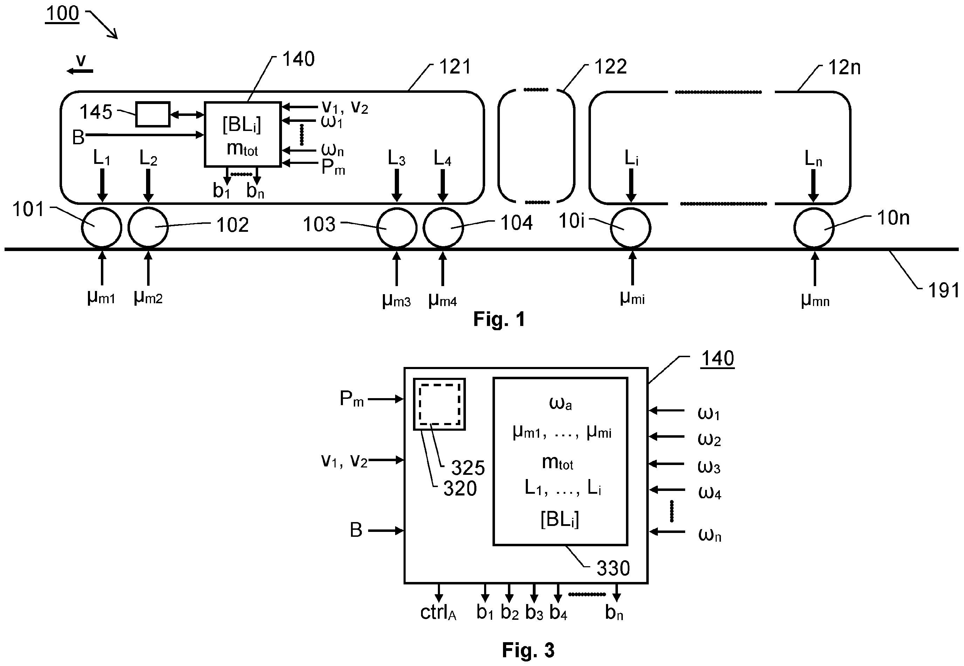

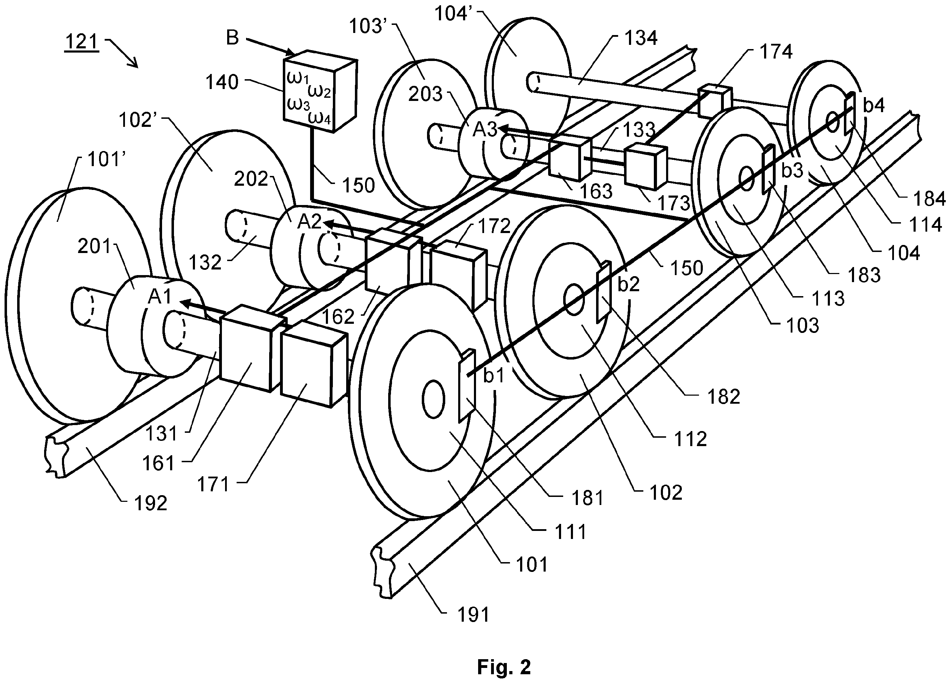

In Figure 1, we see a schematic illustration of a rail vehicle 100 travelling at a speed v and being equipped with a controller 140 according to one embodiment of the invention, and Figure 2 shows an example of a motorized railroad car 121 included in the rail vehicle 100 according to one embodiment of the invention. In the present disclosure, the rail vehicle 100 may be any kind of rail bound vehicle, such as a locomotive, a freight car, a goods wagon, a passenger car/coach, a railcar/railbus, and/or any combination thereof. Figure 3 shows a block diagram of the controller 140 according to one embodiment of the invention.

The controller 140 is arranged to control a set of electrically operated brake units, here exemplified as 171, 172, 173 and 174 respectively, of the rail vehicle 100. To this aim, the controller 140 is configured to receive a brake command B, for example from a driver's cabin or an emergency functionality of the rail vehicle 100, which for example may be passenger-activated with a bypass option.

The controller 140 is further configured to determine, repeatedly, a respective adhesion parameter $\mu_{m1}$, $\mu_{m2}$, $\mu_{m3}$, $\mu_{m4}$, $\mu_{mi}$ and $\mu_{mn}$ reflecting a friction coefficient $\mu e$ between each wheel 101, 101', 102, 102', 103, 103', 104, 104', 10i and 10n respectively of the rail vehicle 100 and a rail 191 and 192 respectively upon which the wheel in question travels. Based on the respective adhesion parameters $\mu_{m1}$, $\mu_{m2}$, $\mu_{m3}$, $\mu_{m4}$, $\mu_{mi}$ and $\mu_{mn}$ and an estimated load $L_1$, $L_2$, $L_3$, $L_4$, Li and $L_n$ respectively on each of the wheels, the controller 140 is also configured to determine a respective largest brake load possible to apply [BLi] on each of the wheels 101, 101', 102, 102', 103, 103', 104, 104', 10i and 10n without exceeding a threshold amount of sliding between the wheel and the rail 191 and 192 respectively. In many cases, the wheels are fixed mounted in relation to the wheel axle. If so, the respective adhesion parameter reflects an average friction coefficient $\mu e$ between the

two wheels and the two rails 191 and 192 contacted by the two wheels. In Figure 1, the respective largest brake loads possible to apply are collectively designated [BL$_i$]. Nevertheless, for each of the wheels, the controller 140 is configured to store a latest determined largest brake load possible to apply in a memory 145. For accuracy reasons, during propulsion of the rail vehicle 100, the controller 140 is preferably configured to update the respective largest brake loads possible to apply on each wheel at a relatively high frequency, say 0.1 Hz to 10 Hz.

Different procedures for determining adhesion parameters and the estimated load on each of the wheels will be described below.

At all times, the controller 140 is configured to scan for the brake command B, which may be received in the controller 140 via a data bus 150, e.g. of CAN (controller area network) format. In response to a received brake command B, the controller 140 is further configured to obtain the latest determined largest brake load possible for each of the wheels from the memory 145, and cause a respective brake force to be applied to each of the wheels 101, 101', 102, 102', 103, 103', 104, 104', 10i and 10n. The respective brake force is here based on the received brake command B and the latest determined largest brake load possible to apply [BLi] on each of the wheels 101, 101', 102, 102', 103, 103', 104, 104', 10i and 10n.

For example, the received brake command B may prescribe an overall brake load of 15 %. In response to this brake command B, and in consideration of the latest determined largest brake load possible to apply [BLi], the controller 140 issues individual brake instructions to each of the electrically operated brake units 171, 172, 173 and 174, which brake instructions are configured to cause such specific brake loads to be applied on each of the wheels 101, 101', 102, 102', 103, 103', 104, 104', 10i and 10n that an overall brake load of 15 % is applied. However, depending on the latest determined largest brake load possible to apply [BLi], the brake load on each wheel may deviate substantially from 15 %. In other words, the controller 140 distributes the brake load in a suitable manner with respect to the current adhesion conditions at each wheel of the rail vehicle 100.

Each of the brake units 171, 172, 173 and 174 is configured to cause a respective pressing member 181, 182, 183 and 184 respectively to apply a respective brake force to a respective rotating member 111, 112, 113 and 114. The rotating members 111, 112, 113 and 114 respectively, in turn, are mechanically linked to the wheels of the rail vehicle 100, i.e. 101, 101', 102, 102', 103, 103', 104, 104', 10i and 10n. Either each pair of wheels is fixed mounted on a common wheel axle, so that they both rotate together with the wheel axle; or each wheel is mounted on a separate wheel axle, so that it may rotate independently from any other wheel. In either case, the brake forces applied to the respective rotating members 111, 112, 113 and 114 cause the rail vehicle 100 to reduce its speed.

According to one embodiment of the invention, the controller 140 is configured to cause the respective brake forces to begin to be applied at different points in time via different brake units in the set of brake units 171, 172, 173 and 174 respectively. This may be useful in order to make the railroad cars 121, 122 and 12n in the behave in various ways during the braking process. For example, starting from the rear, i.e. the railroad car 12n, the controller 140 may control a growing number of brake units to be gradually activated during a brake operation. This will result in that the rail vehicle 100 is stretched, couple by couple, towards the front railroad car 121 as braking progresses. If, instead, it is desired that the rail vehicle 100 is compressed during the brake operation, the controller 140 may control the braking process such that it starts at the front, i.e. in the railroad car 121, and then a growing number of brake units are gradually activated towards the rear of the rail vehicle 100. Alternatively, the controller 140 may cause different brake units to be activated sequentially, so that at no point in time, all brake units are active simultaneously. Such a procedure may be advantageous in order to make use of a track section with especially advantageous adhesion. Namely, in such a case, only the brake units currently being located in said track section may be controlled to be active.

According to another embodiment of the invention, the controller 140 is configured to control the brake units 171, 172, 173 and 174 respectively, such that the specific point in time at which a particular brake unit is activated depends on the latest determined largest brake load possible to apply [BLi] on each of the wheels 101, 101', 102, 102', 103, 103', 104, 104', 10i and 10n respectively. For instance, a given brake unit may be controlled to apply a brake load when the largest brake load possible to apply via this brake unit exceeds a threshold level.

Alternatively, or additionally, the controller 140 may be configured to control the brake units 171, 172, 173 and 174 respectively, such that the specific point in time at which a particular brake unit is activated depends on a position of the brake unit in the rail vehicle 100. For example, a brake operation may thus start by activating only those brake units that, due to their positions in the rail vehicle 100 and/or on the track, fulfil at least one activation condition, e.g. relating to an estimated friction coefficient and/or an inclination of the tracks.

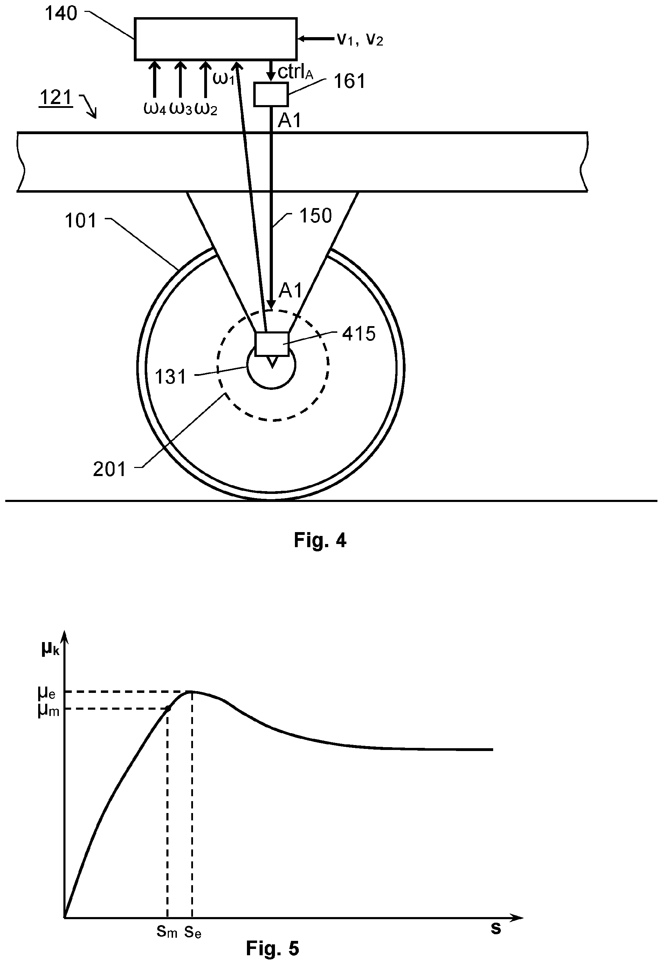

In Figure 4, we see the control unit 140 and a drive unit 201 according to one embodiment of the invention. The drive unit 201 is configured to receive an acceleration control signal A1 from the acceleration controller 161, which, in turn, operates in response to the control message ctrl$_A$ from the controller 140. The acceleration control signal A1 may for example be transmitted via the data bus 150. In response to the acceleration control signal A1, the drive unit 201 is configured to drive the wheel axle 131. The drive unit 201 may contain at least one electric motor whose generated traction force depends on a magnitude of an electric current fed to it.

The acceleration control signal A1 as well as rotational speeds $\omega_1$, $\omega_2$, $\omega_3$ and $\omega_4$ of the rail vehicle's 100 wheel axles 131, 132, 133 and 134 will be described below with reference to Figures 2 and 3.

According to one embodiment of the invention, the controller 140 is configured to obtain a power signal $P_m$ indicating an amount of power being produced by the set of drive units 201, 202 and 203 when accelerating the rail vehicle 100 from a first speed $v_1$ to a second speed $v_2$, for example from a standstill to 10 km/h. Of course, however, according to the invention, the power signal $P_m$ may equally well be received during acceleration of the rail vehicle 100 between any other two speed levels. In any case, the controller 140 is configured to obtain a speed signal indicating respective values of the first and second speeds $v_1$ and $v_2$. The speed signal may originate from a tachometer and/or at least one accelerometer onboard the rail vehicle 100.

Based on the power signal $P_m$ and the values of the first and second speeds $v_1$ and $v_2$, the controller 140 is configured to estimate an overall weight $m_{tot}$ of the rail vehicle 100. This may be done under the assumption that any losses in the motor and losses due to wind and rolling resistance are negligible, which is basically true for low speeds. Provided that the rail vehicle 100 has an onboard accelerometer, it is further possible to take any inclination - positive or negative - of the tracks into account, and thus improve the accuracy of the kinetic energy. Namely, with reservation for inclination, under the assumption that all the supplied power is converted into kinetic energy of the rail vehicle, i.e. $P \cdot t = W_k$, where P is the supplied power, t is the time during which the power has been supplied and $W_k$ is the resulting kinetic energy, it is possible to derive the overall weight $m_{tot}$ of the rail vehicle 100 according to the below.

The resulting kinetic energy $W_k$, in turn, may be expressed as:

$$W_k = m_{tot} \cdot v^2/2, \text{ where } v = v_2 - v_1.$$

In other words, the controller 140 may calculate the overall weight $m_{tot}$ of the rail vehicle 100 as:

$$m_{tot} = \frac{(v_2 - v_1)^2}{2P \cdot t}$$

Referring now to Figure 5, which shows a graph over an example of how a kinetic friction coefficient $\mu_k$ may be expressed as a function of a wheel slippage s. Here, the wheel slippage s is understood to either designate a spinning motion of a wheel relative to the rail or a sliding motion of the wheel relative to the rail. In other words, the wheel slippage s is applicable to an acceleration scenario as well as a retardation ditto.

Characteristically, for lower values, the kinetic friction coefficient $\mu_k$ increases relatively proportionally with increasing wheel slippage s. When approaching a peak value $\mu_e$, however, the kinetic friction coefficient $\mu_k$ levels out somewhat. After having passed the peak value, the kinetic friction coefficient $\mu_k$ is essentially constant for all values of the wheel slippage s. Thus, the friction coefficient peak value $\mu_e$ is associated with an optimal wheel slippage $s_e$ after which a further increase of wheel slippage s results in a gradually reduced, and then almost constant kinetic friction coefficient $\mu_k$.

According to the one embodiment of the invention, the controller 140 is configured to determine a parameter $\mu_m$ that reflects the friction coefficient between at least one of the rail vehicle's 100 wheels and at least one respective rail 191 and/or 192 upon which the rail vehicle 100 travels.

Ideally, the peak value $\mu_e$ should be derived. For example, an estimate of the peak value $\mu_e$ may be derived as follows. When an absolute difference $| \omega_1 - \omega_a |$ between the rotational speed of a specific driven wheel axle 131 and an average rotational speed $\omega_a$ of all the rail vehicle's 100 wheel axles in a driving subset of axles except the specific driven wheel axle 131 exceeds the threshold value, this corresponds to a situation where the wheels 101 and 101' on the specific driven wheel axle 131 experience a wheel slippage $s_m$ near the optimal wheel slippage $s_e$. The kinetic friction coefficient $\mu_k$ is given by the expression:

$$\mu_k = \frac{F}{m_{tot} \cdot g}$$

where

F is the drive force applied by the drive unit,
$m_{tot}$ is the overall weight of the rail vehicle 100, and
g is the standard acceleration due to gravity.

Under the assumption that the wheel slippage $s_m$ is near the optimal wheel slippage $s_e$, the peak value $\mu_e$ of the kinetic friction coefficient $\mu_k$ may be estimated relatively accurately; and the proximity of wheel slippage $s_m$ to the optimal wheel slippage $s_e$ is ensured by said threshold value for the absolute difference $|\omega_1 - \omega_a|$ between the rotational speed of the specific driven wheel axle 131 and the average rotational speed $\omega_a$ of all the rail vehicle's 100 wheel axles except the specific driven wheel axle 131.

The adhesion parameter $\mu_m$ thus reflects the friction coefficient $\mu_e$ between at least one of the wheels, here 101 and 101', and at least one of the rails 191 and 192 upon which the rail vehicle 100 travels.

For further enhanced brake control, it is also advantageous to know exactly how the rail vehicle's 100 weight is distributed over its wheel axles. Namely, only a comparatively low brake force can be applied to a relatively lightly loaded axle without risking that its wheels experience slippage against the rails, whereas a relatively heavily loaded axle may be subjected to a comparatively high brake force before its wheels experience slippage against the rails. Both for efficiency reasons and to avoid material damage, wheel slippage shall be avoided whenever possible. Therefore, to be on the safe side, according to the known practice, an estimated lowest axle weight typically determines the maximum allowed brake force for the entire rail vehicle. Of course, this results in an overall suboptimal acceleration/braking performance.

Consequently, the controller 140 is preferably arranged to estimate the different axle weights of the rail vehicle 100. Figure 2 exemplifies four such wheel axles in the form of 131, 132, 133 and 134 respectively, which are comprised in the motorized railroad car 121 included in the rail vehicle 100. For example, the motorized railroad car 121 may be the first railroad car or the rail vehicle 100 as illustrated in Figure 1. In response to acceleration control signals A1, A2 and A3 from acceleration controllers 161, 162 and 163, a set of drive units 201, 202 and 203 is configured to apply a respective traction force to each wheel axle in a driving subset of the wheel axles 131, 132 and 133, such that the rail vehicle 100 accelerates.

As mentioned initially, a rail vehicle 100 may be very long, and consequently contain a substantially larger total number of wheel axles than what is illustrated in Figure 1. Traditionally, each bogie has two wheel axles carrying altogether four wheels, and each car body of the rail vehicle 100 includes a respective bogie in the front and rear ends.

Referring again ti Figure 2, According to one embodiment of the invention, the controller 140 is further configured to:

(a) obtain wheel speed signals indicating respective rotational speeds $\omega_1$, $\omega_2$ and $\omega_3$ of the wheel axles 131, 132 and 133 respectively in the driving subset of wheel axles,

(b) produce an acceleration control signal A1 to a specific drive unit 201 in the set of drive units such that this drive unit 201 applies a gradually increasing traction force to a specific driven wheel axle in the set of driving wheel axles, here exemplified by 131,

(c) determine, repeatedly during production of the acceleration control signal A1, an absolute difference $|\omega_1 - \omega_a|$ between the rotational speed $\omega_1$ of the specific driven wheel axle 131 and an average rotational speed $\omega_a$ of all the wheel axles in the driving subset of the wheel axles except the specific driven wheel axle, i.e. here 132 and 133, and in response to the absolute difference $|\omega_1 - \omega_a|$ exceeding a threshold value

(d) determine a parameter $\mu_m$ reflecting a friction coefficient $\mu_e$ between a pair of wheels 101 and 101' respectively on the specific wheel axle 131 and a pair of rails 191 and 192 upon which the rail vehicle 100 travels.

Finally, the controller 140 is configured to repeat the above steps (a) to (c) for each wheel axle 131, 132 and 133 in the driving subset, and based thereon estimate a respective fraction $m_1$, $m_2$ and $m_3$ of the overall weight $m_{tot}$ carried by each of these wheel axles.

It is worth mentioning that the above-mentioned specific driven wheel axle 131 does not need to be any particular wheel axle, e.g. a frontmost or a rearmost wheel axle of the rail vehicle 100. On the contrary, the above procedure may start with an arbitrary selected wheel axle in the driving subset.

Moreover, it is generally advantageous to execute the above procedure in line with a schedule, fixed or dynamic, wherein each wheel axle in the driving subset alternately either represents the specific wheel axle or is included in the complement set, i.e. all the wheel axles except the specific wheel axle. Repeated execution of procedure is nevertheless beneficial to enable adjustment of the braking functionality in response to any changes in the overall weight $m_{tot}$ and/or a redistribution of the overall weight $m_{tot}$ over the wheel axles during operation of the rail vehicle 100.

As exemplified by the wheel axle 134 in Figure 2, one or more of the rail vehicle's 100 wheel axles may be non-driven, i.e. not be comprised in the driving subset of the wheel axles 131, 132 and 133. To handle this case and thus enable estimation of the axle weights of the non-driven axles, according to one embodiment of the invention, the controller 140 is further configured execute the below procedure.

(e) Obtain wheel speed signals indicating respective rotational speeds $\omega_1$, $\omega_2$, $\omega_3$ and $\omega_4$ of each rail vehicle's 100 wheel axles 131, 132, 133 and 134 respectively;

(f) produce a brake control signal b4, for example over the data bus 150, to a brake unit 184 configured to apply a brake force to the non-driven wheel axle 134 such that this brake unit applies a gradually increasing brake force to the non-driven wheel axle 134;

(g) determine, repeatedly during production of the brake control signal B4, an absolute difference $|\omega_4 - \omega_a|$ between the rotational speed $\omega_4$ of the non-driven wheel axle 134 and an average rotational speed $\omega_3$ of all the wheel axles 131, 132 and 133 except the non-driven wheel axle 134; and in response to the absolute difference exceeding a threshold value, preferably however not necessarily the same threshold value as referred to above in relation to Figure 5;

(h) determine a parameter $\mu_m$ reflecting a friction coefficient $\mu_e$ between a pair of wheels 104 and 104' on the specific wheel axle 134 and a pair of rails 191 and 192 upon which the rail vehicle 100 travels,

In the general case where the rail vehicle has more than one non-driven axle, the controller 140 is further configured to repeat steps (e) to (g) for each of the non-driven wheel axles, and based thereon estimate a respective fraction $m_4$ of the overall weight $m_{tot}$ carried by each of the non-driven wheel axles.

The controller 140 may be configured to generate a control message $ctrl_A$ to make the acceleration controllers 161, 162 and 162 produce acceleration control signals A1, A2 and A3 to the drive units 201, 202 and 203 respectively, such that an average drive force applied to the wheel axles 132, and 133 except the specific wheel axles 131 is gradually decreased when the drive force applied to the specific wheel axle 131 is gradually *increased*. In other words, the driving on the other wheel axles 132 and 133 compensate for the somewhat excessive drive force applied to the specific wheel axle 131.

Preferably, this compensation is temporally matched. This means that the controller 140 is configured to generate the control message $ctrl_A$ to cause the acceleration controllers 161, 162 and 162 to produce acceleration control signals A1, A2 and A3 to the drive units 201, 202 and 203 such that, at each point in time, the gradual decrease of the average drive force applied to the wheel axles 132 and 133 except the specific wheel axles 131 corresponds to the gradual increase of the drive force applied to the specific wheel axle 131. Namely, thereby the deviating drive force applied to specific wheel axle 131 is masked by the opposite deviation represented by the drive force applied to the wheel axles 132 and 133 in the driving subset.

In Figure 2, the railroad car 121 contains a set of drive units 201, 202 and 203 respectively configured to apply a respective traction force to each of the wheel axles 131, 132 and 133 in the driving subset of the wheel axles. Nevertheless, all the wheel axles 131, 132, 133 and 134 of the railroad car 121 are braked. This means that an electrically operated brake unit 171, 172, 173 and 174 respectively is responsible for retarding the wheels on each of said wheel axles in response to a brake command B being received in the controller 140. It is safe to assume that all railroad cars in a commercial rail vehicle are braked in this manner, or in a manner equivalent thereto.

Thus, as an alternative to the above-described strategies, according to one embodiment of the invention, the controller 140 is configured to determine the respective adhesion parameters $\mu_{m1}$, $\mu_{m2}$, $\mu_{m3}$, $\mu_{m4}$, $\mu_{mi}$ and $\mu_{mn}$ respectively as described below.

The controller 140 is configured to determine a particular adhesion parameter $\mu_{m1}$, which particular adhesion parameter $\mu_{m1}$ reflects the friction coefficient $\mu_e$ between at least one particular wheel, say 101 and 101', and the rails 191 and 192 respectively upon which the at least one particular wheel travels by:

(a) obtaining wheel speed signals indicating respective rotational speeds $\omega_1$, $\omega_2$, $\omega_3$ and $\omega_4$ respectively of the braked wheel axles 131, 132, 133, 134 of the rail vehicle 100;

(b) controlling a specific brake unit 171 in a set of brake units to produce a brake control signal b1 such that the specific brake unit 171 applies a gradually increasing brake force to a specific wheel axle 131 on which the at least one wheel 101 and 101' is mounted;

(c) determine, repeatedly, during production of the brake control signal b1, an absolute difference $|\omega_1 - \omega_a|$ between the rotational speed of the specific wheel axle 131 and an average rotational speed $\omega_a$ of the wheel axles 132, 133 and 134 except the specific wheel axle 131; and in response to the absolute difference $|\omega_1 - \omega_a|$ exceeding a threshold value

(d) determine the particular adhesion parameter $\mu_{m1}$.

Further, the controller 140 is preferably configured to repeat steps (a) to (c) for each of the wheel axles in the rail vehicle 100 being defined as the specific wheel axle, based thereon estimate a respective weight fraction of the overall weight $m_{tot}$ being carried by each of the braked wheel axles, and based thereon, in turn, determine the estimated load $L_1$, $L_2$, $L_3$, $L_4$, $L_i$ and $L_n$ respectively on each of the wheels. Typically, the last step simply involves dividing the respective axle weight by two, i.e. assuming that the load is evenly distributed between the wheels on the same wheel axle.

Analogous to the above, according to one embodiment of the invention, the controller is configured to:

(i) produce the brake control signal b1 to the specific brake unit 171, and

(ii) produce respective brake control signals b1, b2, and b3 respectively to each of the brake units 172, 173 and 174 arranged to cause brake forces to be applied to the wheel axles different from the specific wheel axle 131, such that an average brake force applied to the wheel axles 132, 133 and 134 different from the specific wheel axle 131 is gradually decreased when the brake force applied to the specific wheel axle 131 is gradually increased, so that the controlled stressing of the adhesion interface at the specific wheel axle 131 is masked not to be noticeable to any passengers in the rail vehicle 100.

Preferably, if the rail vehicle 100 includes the data bus 150, the controller 140 is configured to send respective brake control signals $b_1$, $b_2$, $b_3$, $b_4$ and $b_n$ via the data bus 150. The respective brake control signals $b_1$, $b_2$, $b_3$, $b_4$ and $b_n$ are here configured to cause the respective brake forces to be applied to each of the wheels 101, 101', 102, 102', 103, 103', 104, 104', 10i and 10n respectively.

For further enhanced braking performance, according to one embodiment of the invention, the controller 140 is configured to adapt the applied brake forces being dynamically during the braking process as described below.

While causing the respective brake force to be applied to each of the wheels of the rail vehicle 100, the controller 140 is here configured to:

(i) repeatedly determine the respective adhesion parameters $\mu_{m1}$, $\mu_{m2}$, $\mu_{m3}$, $\mu_{m4}$, $\mu_{mi}$ and $\mu_{mn}$ reflecting the friction coefficient $\mu_e$ between each wheel 101, 101', 102, 102', 103, 103', 104, 104', 10i and 10n and the respective rail 191 and 192 upon which the wheel in question travels.

(ii) based on the respective adhesion parameter $\mu_{m1}$, $\mu_{m2}$, $\mu_{m3}$, $\mu_{m4}$, $\mu_{mi}$ and $\mu_{mn}$ respectively and the estimated load $L_1$, $L_2$, $L_3$, $L_4$, $L_i$, and $L_n$ respectively on each of the wheels, determine the respective largest brake load possible to apply [BLi] on each of the wheels without exceeding the threshold amount of sliding between the respective wheel and rail, and

(iii) adapt the respective brake forces being applied to each of the wheels 101, 101', 102, 102', 103, 103', 104, 104', 10i and 10n based on the determined respective largest brake load possible to apply [BLi] on each of the wheels without exceeding the threshold amount of sliding between the respective wheel and the rail.

The above procedure enables a very accurate and efficient braking, wherein the actual adhesion conditions at the wheel-to-rail interface are maximally utilized. Thus, a WSP system that may be linked to the brake units will typically not need to be employed.

Figure 3 shows a block diagram of the controller 140 according to one embodiment of the invention. The controller 140 includes processing circuitry in the form of at least one processor 330 and a memory unit 320, i.e. non-volatile data carrier, storing a computer program 325, which, in turn, contains software for making the at least one processor 330 execute the actions mentioned in this disclosure when the computer program 325 is run on the at least one processor 330.

The controller 140 contains input interfaces configured to receive the brake command B, the power signal $P_m$, the speed signal expressing the speeds $v_1$ and $v_2$ respectively and the wheel speed signals $\omega_1$, $\omega_2$, $\omega_3$, $\omega_4$ and $\omega_n$ respectively indicating the rotational speeds of all the wheel axles in the rail vehicle 100. Further, the controller 140 contains an output interface configured to provide the control signal $ctrl_A$ to enable the acceleration controllers to cause its associated drive unit 201, 202 and 203 respectively to produce a respective traction force in response to acceleration control signals A1, A2 and A3 respectively.

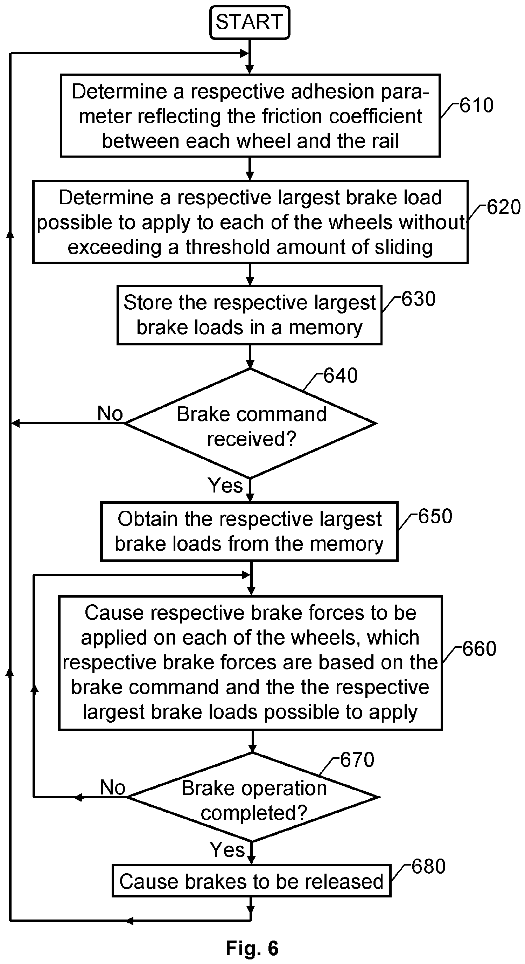

In order to sum up, and with reference to the flow diagram in Figure 6, we will now describe the computer-implemented method for a rail vehicle 100 that is carried out by the controller 140 according to the invention and preferred embodiments thereof.

In a first step 610, a respective adhesion parameter is determined, which respective adhesion parameter reflecting a respective friction coefficient $\mu_e$ between each wheel of the rail vehicle and the respective rail upon which the wheel in question travels.

In a following step 620, a respective largest brake load possible to apply on each of the wheels without exceeding a threshold amount of sliding between the wheel and the rail is determined based on the respective adhesion parameter and an estimated load on each of the wheels. Thereafter, a step 630, stores the respective determined largest brake load possible to apply for each of the wheels in a memory.

Subsequently, a step 640 checks if a brake command has been received; and if so, a step 650 follows. Otherwise, the procedure loops back to step 610.

In step 650, the latest determined largest brake load possible to apply for each of the wheels is obtained from the memory.

In a step 660 thereafter, a respective brake force is caused to be applied, which respective brake force is based on the received brake command and the latest determined largest brake load possible to apply on each of the wheels.

Then, a step 670 checks if the brake operation has been completed, which, for example may be indicated by a received updated brake command instructing the brakes to be released. If, in step 670, it is found that the brake operation has been completed, a step 680 follows; and otherwise, the procedure loops back to step 660 for continued brake application.

In step 680, the brakes are caused to be released. Thereafter, the procedure loops back to step 610.

All of the process steps, as well as any subsequence of steps, described with reference to Figure 6 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

Variations to the disclosed embodiments can be understood and effected by those skilled in the art in practicing the claimed invention, from a study of the drawings, the disclosure, and the appended claims.

The invention is not restricted to the described embodiments in the figures, but may be varied freely within the scope of the claims.

**Claims**

1. A controller (140) for controlling a set of electrically operated brake units (171, 172, 173, 174) of a rail vehicle (100), which controller (140) is configured to:

   determine, repeatedly, a respective adhesion parameter ($\mu_{m1}$, $\mu_{m2}$, $\mu_{m3}$, $\mu_{m4}$, $\mu_{mi}$, $\mu_{mn}$) reflecting a friction coefficient ($\mu_e$) between each wheel (101, 101', 102, 102', 103, 103', 104, 104', 10i, 10n) of the rail vehicle (100) and a rail (191; 192) upon which the wheel travels,
   determine, based on the respective adhesion parameter ($\mu_{m1}$, $\mu_{m2}$, $\mu_{m3}$, $\mu_{m4}$, $\mu_{mi}$, $\mu_{mn}$) and an estimated load ($L_1$, $L_2$, $L_3$, $L_4$, $L_i$, $L_n$) on each of the wheels, a respective largest brake load possible to apply ([$BL_i$]) on each of the wheels without exceeding a threshold amount of sliding between the wheel and the rail (191; 192),
   store, for each of the wheels, a latest determined largest brake load possible to apply in a memory (145),

   wherein in response to a received brake command (B), the controller (140) is further configured to:

   obtain the latest determined largest brake load possible for each of the wheels from the memory (145), and
   cause a respective brake force to be applied to each of the wheels, which respective brake force is based on the received brake command (B) and the latest determined largest brake load possible to apply ([$BL_i$]) on each of the wheels (101, 101', 102, 102', 103, 103', 104, 104', 10i, 10n).

2. The controller (140) according to claim 1, wherein the controller (140) is configured to cause the respective brake forces to begin to be applied at different points in time via different brake units in the set of brake units (171, 172, 173, 174).

3. The controller (140) according to claim 2, wherein the specific point in time at which a particular one of said brake units is activated depends on the latest determined largest brake load possible to apply ([$BL_i$]) on each of the wheels (101, 101', 102, 102', 103, 103', 104, 104', 10i, 10n).

4. The controller (140) according to any of claims 2 or 3, wherein the specific point in time at which a particular one of said brake units is activated depends on a position of the brake unit in the rail vehicle (100).

5. The controller (140) according to any one of the preceding claims, wherein the controller (140) is configured to estimate a total weight ($m_{tot}$) of the rail vehicle (100) based on:

   a power signal ($P_m$) indicating an amount of power produced by a set of drive units (201, 202, 203) in the rail vehicle (100) when accelerating the rail vehicle (100) from a first speed ($v_1$) to a second speed (V2), and

a speed signal indicating respective values of the first and second speeds ($v_1$, $v_2$).

6. The controller (140) according to any one of the preceding claims, wherein the controller (140) is configured to determine a particular adhesion parameter ($\mu_{m1}$) of the respective adhesion parameters ($\mu_{m1}$, $\mu_{m2}$, $\mu_{m3}$, $\mu_{m4}$, $\mu_{mi}$, $\mu_{mn}$), which particular adhesion parameter ($\mu_{m1}$) reflects the friction coefficient ($\mu e$) between at least one particular wheel (101, 101') of said wheels and the rail (191; 192) upon which the at least one particular wheel (101, 101') travels by:

(a) obtaining wheel speed signals indicating respective rotational speeds ($\omega_1$, $\omega_2$, $\omega_3$) of a set of wheel axles in a driving subset of wheel axles (131, 132, 133) of the rail vehicle (100),
(b) controlling a specific drive unit (201) in a set of drive units to produce an acceleration control signal (A1) such that the specific drive unit (201) applies a gradually increasing traction force to a specific wheel axle (131) in the driving subset of the wheel axles (131, 132, 133) on which specific wheel axle (131) the at least one wheel (101, 101') is mounted,
(c) determine, repeatedly, during production of the acceleration control signal (A1), an absolute difference ($|\omega_1 - \omega_a|$) between the rotational speed of the specific wheel axle (131) and an average rotational speed ($\omega_a$) of the wheel axles (132, 133) in the driving subset of the wheel axles except the specific wheel axle (131); and in response to the absolute difference ($|\omega_1 - \omega_a|$) exceeding a threshold value
(d) determine the particular adhesion parameter ($\mu_{m1}$).

7. The controller (140) according to claim 6, wherein the controller (140) is further configured to

repeat steps (a) to (c) for each of the wheel axles in the driving subset of wheel axles, based thereon
estimate a respective weight fraction of the overall weight ($m_{tot}$) carried by each of the wheel axles in the driving subset of wheel axles, and based thereon
determine the estimated load ($L_1$, $L_2$, $L_3$, $L_4$, $L_i$, $L_n$) on each of the wheels.

8. The controller (140) according to any of claims 6 or 7, wherein the controller (140) is configured to:

(i) produce the acceleration control signal (A1) to the specific drive unit (201), and
(ii) produce respective acceleration control signals (A2, A3) to each drive unit (202, 203) in the set of drive units arranged to cause traction forces to be applied to the wheel axles (132, 133) in the driving subset of the wheel axles different from the specific wheel axle (131),

such that an average traction force applied to the wheel axles (132, 133) different from the specific wheel axle (131) is gradually decreased when the traction force applied to the first wheel axle (131) is gradually increased.

9. The controller (140) according to any of claims 1 to 5, wherein the controller (140) is configured to determine a particular adhesion parameter ($\mu_{m1}$) of the respective adhesion parameters ($\mu_{m1}$, $\mu_{m2}$, $\mu_{m3}$, $\mu_{m4}$, $\mu_{mi}$, $\mu_{mn}$), which particular adhesion parameter ($\mu_{m1}$) reflects the friction coefficient ($\mu e$) between at least one particular wheel (101, 101') of said wheels and the rail (191; 192) upon which the at least one particular wheel (101, 101') travels by:

(a) obtaining wheel speed signals indicating respective rotational speeds ($\omega_1$, $\omega_2$, $\omega_3$, $\omega_4$) of each of the wheel axles (131, 132, 133, 134) of the rail vehicle (100),
(b) controlling a specific brake unit (171) in a set of brake units to produce a brake control signal (b1) such that the specific brake unit (171) applies a gradually increasing brake force to a specific wheel axle (131) of said wheel axles on which specific wheel axle (131) the at least one wheel (101, 101') is mounted,
(c) determine, repeatedly, during production of the brake control signal (b1), an absolute difference ($|\omega_1 - \omega_a|$) between the rotational speed of the specific wheel axle (131) and an average rotational speed ($\omega_a$) of the wheel axles (132, 133, 134) except the specific wheel axle (131); and in response to the absolute difference ($|\omega_1 - \omega_a|$) exceeding a threshold value
(d) determine the particular adhesion parameter ($\mu_{m1}$).

10. The controller (140) according to claim 9, wherein the controller (140) is further configured to

repeat steps (a) to (c) for each of the wheel axles in the braked subset of wheel axles, based thereon
estimate a respective weight fraction of the overall weight ($m_{tot}$) carried by each of said wheel axles, and based thereon
determine the estimated load ($L_1$, $L_2$, $L_3$, $L_4$, $L_i$, $L_n$) on each of the wheels.

11. The controller (140) according to any of claims 9 or 10, wherein the controller (140) is configured to:

(i) produce the brake control signal (b1) to the specific brake unit (171), and

(ii) produce respective brake control signals (b1, b2, b3) to each brake unit (172, 173, 174) in the set of brake units arranged to cause brake forces to be applied to the wheel axles (132, 133, 134) different from the specific wheel axle (131),

such that an average brake force applied to the wheel axles (132, 133, 134) different from the specific wheel axle (131) is gradually decreased when the brake force applied to the specific wheel axle (131) is gradually increased.

12. The controller (140) according to any one of the preceding claims, wherein the controller (140) is configured to receive the brake command (B) via a data bus (150).

13. The controller (140) according to claim 12, wherein the controller (140) is configured to send respective brake control signals ($b_1$, $b_2$, $b_3$, $b_4$, $b_n$) via the data bus (150), which respective brake control signals ($b_1$, $b_2$, $b_3$, $b_4$, $b_n$) are configured to cause the respective brake forces to be applied to each of the wheels (101, 101', 102, 102', 103, 103', 104, 104', 10i, 10n).

14. The controller (140) according to any one of the preceding claims, while causing the respective brake force to be applied to each of the wheels of the rail vehicle (100), the controller (140) is further configured to:

determine, repeatedly, the respective adhesion parameter ($\mu_{m1}$, $\mu_{m2}$, $\mu_{m3}$, $\mu_{m4}$, $\mu_{mi}$, $\mu_{mn}$) reflecting the friction coefficient ($\mu e$) between each wheel (101, 101', 102, 102', 103, 103', 104, 104', 10i, 10n) of the rail vehicle (100) and the rail (191; 192) upon which the wheel travels,

determine, based on the respective adhesion parameter ($\mu_{m1}$, $\mu_{m2}$, $\mu_{m3}$, $\mu_{m4}$, $\mu_{mi}$, $\mu_{mn}$) and the estimated load ($L_1$, $L_2$, $L_3$, $L_4$, $L_i$, $L_n$) on each of the wheels, the respective largest brake load possible to apply ($[BL_i]$) on each of the wheels without exceeding the threshold amount of sliding between the wheel and the rail (191; 192), and

adapt the respective brake forces being applied to each of the wheels of the rail vehicle (100) based on the determined respective largest brake load possible to apply ($[BL_i]$) on each of the wheels without exceeding the threshold amount of sliding between the wheel and the rail (191; 192).

15. A computer-implemented method for controlling a set of electrically operated brake units (171, 172, 173, 174) of a rail vehicle (100), which method is performed in processing unit (330) of a controller (140) in the rail vehicle (100), and which method comprises:

determining, repeatedly, a respective adhesion parameter ($\mu_{m1}$, $\mu_{m2}$, $\mu_{m3}$, $\mu_{m4}$, $\mu_{mi}$, $\mu_{mn}$) reflecting a friction coefficient ($\mu e$) between each wheel (101, 101', 102, 102', 103, 103', 104, 104', 10i, 10n) of the rail vehicle (100) and a rail (191; 192) upon which the wheel travels,

determining, based on the respective adhesion parameter ($\mu_{m1}$, $\mu_{m2}$, $\mu_{m3}$, $\mu_{m4}$, $\mu_{mi}$, $\mu_{mn}$) and an estimated load ($L_1$, $L_2$, $L_3$, $L_4$, $L_i$, $L_n$) on each of the wheels, a respective largest brake load possible to apply ($[BL_i]$) on each of the wheels without exceeding a threshold amount of sliding between the wheel and the rail (191; 192),

storing, for each of the wheels, a latest determined largest brake load possible to apply in a memory (145),

wherein in response to a received brake command (B), the method further comprises:

obtaining the latest determined largest brake load possible to apply for each of the wheels from the memory (145), and

causing a respective brake force to be applied to each of the wheels, which respective brake force is based on the received brake command (B) and the latest determined largest brake load possible to apply ($[BL_i]$) on each of the wheels (101, 101', 102, 102', 103, 103', 104, 104', 10i, 10n).

16. A computer program (325) loadable into a non-volatile data carrier (320) communicatively connected to at least one processor (430), the computer program (325) comprising software for executing the method according to claim 15 when the computer program (325) is run on the at least one processor (330).

17. A non-volatile data carrier (320) containing the computer program (325) of the claim 16.

**Fig. 1**

**Fig. 3**

EP 4 523 982 A1

**Fig. 2**

**Fig. 4**

**Fig. 5**

START

Determine a respective adhesion para-
meter reflecting the friction coefficient
between each wheel and the rail ⟋610

Determine a respective largest brake load
possible to apply to each of the wheels without ⟋620
exceeding a threshold amount of sliding

Store the respective largest ⟋630
brake loads in a memory

640
Brake command
received?
No ←

Yes ↓

Obtain the respective largest ⟋650
brake loads from the memory

Cause respective brake forces to be
applied on each of the wheels, which
respective brake forces are based on the ⟋660
brake command and the the respective
largest brake loads possible to apply

670
Brake operation
completed?
No ←

Yes ↓

Cause brakes to be released ⟋680

Fig. 6

Europäisches
Patentamt

European
Patent Office

Office européen
des brevets

# EUROPEAN SEARCH REPORT

**Application Number**

EP 23 19 6886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 037051 A (UNIV TOKYO; NISHINIPPON RYOKAKU TETSUDO KK) 22 March 2016 (2016-03-22) | 1,12-17 | INV.<br>B60T8/17<br>B60T8/172 |
| A | * Abstract; par. [0001], [0016], [0021], [0052], [0107]; cl. 1 * | 2-11 | B60T8/174<br>B60T8/176<br>B60T8/18 |
| X | US 2021/284110 A1 (KUMAR AJITH KUTTANNAIR [US] ET AL) 16 September 2021 (2021-09-16) * Fig. 1-4; par. [0001], [0014], [0018], [0019], [0039], [0042], [0043], [0065]; cl. 1-2 * | 1,12-17 | |

-----

-----

**TECHNICAL FIELDS SEARCHED (IPC)**

**B60T**

The present search report has been drawn up for all claims

| Place of search | Date of completion of the search | Examiner |
|---|---|---|
| Munich | 19 February 2024 | Kirov, Youlian |

## ANNEX TO THE EUROPEAN SEARCH REPORT
## ON EUROPEAN PATENT APPLICATION NO.

**EP 23 19 6886**

This annex lists the patent family members relating to the patent documents cited in the above-mentioned European search report.
The members are as contained in the European Patent Office EDP file on
The European Patent Office is in no way liable for these particulars which are merely given for the purpose of information.

**19-02-2024**

| Patent document cited in search report | Publication date | Patent family member(s) | Publication date |
|---|---|---|---|
| JP 2016037051 A | 22-03-2016 | JP 6401540 B2<br>JP 2016037051 A | 10-10-2018<br>22-03-2016 |
| US 2021284110 A1 | 16-09-2021 | NONE | |

EPO FORM P0459

For more details about this annex : see Official Journal of the European Patent Office, No. 12/82